# EUROPEAN PATENT APPLICATION

(11) **EP 4 564 651 A1**
(43) Date of publication of application: **04.06.2025**
(21) Application number: 23944154.6
(22) Date of filing: 25.09.2023
(51) Int. Cl.: H02K 1/14, H02K 1/02

(54) **STATOR ASSEMBLY, ELECTRIC MOTOR AND POWER APPARATUS**

(30) Priority: 05.07.2023 CN 202310816920
(71) Applicant: Deepal Automobile Technology Co., Ltd., Chongqing 401133 (CN)
(72) Inventor: MA, Jia, Chongqing 401135 (CN); LU, Youjun, Chongqing 401135 (CN); DU, Changhong, Chongqing 401135 (CN); LI, Zonghua, Chongqing 401135 (CN)
(74) Representative: EGLI-EUROPEAN PATENT ATTORNEYS
(86) International application number: PCT/CN2023/121070
(87) International publication number: WO 2025/007431

(57) **Abstract**

Provided are a stator assembly, an electric motor, and a power equipment. The stator assembly includes a stator yoke (11) and a stator tooth (12). The stator yoke (11) has a receiving chamber formed in the stator yoke (11), and the receiving chamber has a first connection portion (111) formed at an inner wall of the receiving chamber. The stator tooth (12) has a second connection portion (121) formed at a periphery of the stator tooth (12). The second connection portion (121) is adapted to engage with the first connection portion (111) to connect the stator tooth (12) to the stator yoke (11) to allow the stator tooth (12) to be received in the receiving chamber. The stator tooth (12) is made of oriented silicon steel.

## Description

### CROSS-REFERENCE TO RELATED APPLICATION

This application claims priority to China Patent Application No. 202310816920.X, entitled "STATOR ASSEMBLY, ELECTRIC MOTOR, AND POWER EQUIPMENT", and filed on July 5, 2023, the entire contents of which are incorporated herein by reference.

### TECHNICAL FIELD

The present disclosure relates to the field of electric motor, and in particular to a stator assembly, an electric motor, and a power equipment.

### BACKGROUND

An electric motor is the core of a new energy vehicle. As technology evolves, requirements for operation performance of the electric motor in the field of new energy vehicles are getting higher and higher. Analysis of the long-term operating conditions of the electric motor of the new energy vehicle has shown that approximately 75% of motor loss is due to iron loss and mechanical loss. Therefore, reducing the iron loss of the electric motor can quickly and effectively improve operating efficiency of the electric motor. An iron core of an existing compressor permanent magnet synchronous motor generally made of non-oriented electrical steel, and a saturation magnetic density of the non-oriented electrical steel is limited, which limits the performance of the electric motor under certain special operating conditions. For example, under the operating conditions of high rotation speed or high torque operation, an iron core of an electric motor stator, especially a stator tooth, is limited by a size of the electric motor. At a predetermined tooth width, an increase in magnetic density would cause magnetic saturation of a stator core. Once the magnetic density is saturated somewhere, it will inevitably cause significant iron loss in the electric motor, thus reducing the efficiency of the electric motor.

Patent CN207782503U, titled "Stator Core Made of Oriented Silicon Steel", proposes that the stator core is constructed into a plurality of U-shaped iron cores composed of oriented silicon steel laminations to allow characteristics of high magnetic permeability and low iron loss in a rolling direction of the oriented electrical steel to be fully exerted. Therefore, the electric motor has characteristics of a short magnetic circuit, less magnetic leakage, low loss, low noise, high material utilization rate, high torque density, and the like, and the consumption of copper wires can be reduced, reducing a temperature rise of the electric motor. However, the U-shaped iron core in the patent cannot be applied to a current flat-wire winding motor mainstream. Further, a stator tooth and a stator yoke are made of oriented silicon steel, which would increase the motor loss without meeting the requirements of the stator yoke on a magnetic circuit of a rotating motor.

In the related art, the stator core of the electric motor is made of non-oriented silicon steel as a raw material, resulting in large iron loss of the electric motor under the operating conditions of high rotation speed or high torque operation and reduced efficiency of the electric motor. However, the stator core of the electric motor is made of oriented silicon steel, which will lead to poor uniformity of various performances of the electric motor stator due to the poor non-rolling direction performance of the oriented silicon steel and the rotation characteristics of the electric motor. In addition, the requirements of the stator yoke for the magnetic circuit of the rotating motor cannot be met, thus increasing the electric loss and affecting the efficiency of the electric motor. In addition, the U-shaped stator core cannot be applied to the current mainstream flat-wire winding motor, and thus has a small application range and poor universality.

### SUMMARY

The present disclosure aims at solving one of the technical problems in the related art at least to some extent.

To this end, an object of the present disclosure is to provide a stator assembly, which can reduce electric motor loss, improve the efficiency of an electric motor, and optimize performance of the electric motor.

Another object of the present disclosure is to provide an electric motor having the stator assembly described above.

A further another object of the present disclosure is to provide a power equipment having the electric motor described above.

A stator assembly for the electric motor according to an embodiment of the present disclosure includes a stator yoke and a stator tooth. The stator yoke has a receiving chamber formed in the stator yoke, and the receiving chamber has a first connection portion formed at an inner wall of the receiving chamber. The stator tooth has a second connection portion formed at a periphery of the stator tooth, and the second connection portion is adapted to engage with the first connection portion to connect the stator tooth with the stator yoke and to allow the stator tooth to be received in the receiving chamber. The stator tooth is made of oriented silicon steel.

According to the stator assembly, by providing the stator yoke and the stator tooth, forming the first connection portion at the inner wall of the receiving chamber of the stator yoke, and forming the second connection portion the periphery of the stator tooth, the stator tooth can be connected to the stator yoke by engaging the second connection portion with the first connection portion, and the stator tooth and components mounted on the stator tooth can be received in the receiving chamber of the stator yoke, thereby realizing assembly of the stator assembly. The stator tooth is made of the oriented silicon steel to improve magnetic permeability of the stator assembly, reduce iron loss of the electric motor, and reduce a temperature rise when the electric motor operates at a high speed. Therefore, operating efficiency of the electric motor is improved, a volume and cost of the electric motor is reduced, and it is beneficial to improving an endurance mileage of a whole vehicle. In the related art, the stator core is made of non-oriented silicon steel, which results in large iron loss and reduced electric motor efficiency under operation conditions of high rotation speed or high torque. However, the stator core according to the embodiments is made of the oriented silicon steel, which results in poor uniformity of various performances of the electric motor stator and cannot meet requirements of the stator yoke on a magnetic circuit of a rotating motor, thereby increasing the electric motor loss and affecting the efficiency of the electric motor. The stator yoke and the stator tooth are respectively constructed as two separate components to allow the stator yoke and the stator tooth to be manufactured by using different materials and processed based on respective operating requirements. In this way, purposes of accurately using materials and optimizing the performance of the stator assembly are achieved, and a material utilization rate is improved while the efficiency of the electric motor is improved, thereby saving the economic cost. In addition, since the stator yoke and the stator tooth are connected to each other through the engagement between the first connection portion and the second connection portion, some components required to be mounted at the stator tooth in the stator assembly can be mounted and fixed at the stator tooth separately before the stator tooth and the stator yoke are assembled, thereby avoiding a limitation of the stator yoke on a mounting direction and a mounting space of the components on the stator tooth. Therefore, the mounting direction and the mounting space of the components on the stator tooth can be increased, thereby effectively improving mounting convenience of the components on the stator tooth. Therefore, it is beneficial to protecting an upper part of the stator tooth from being scratched, thereby contributing to improve the safety of the stator assembly and prolonging a service life of the stator assembly.

In addition, the stator assembly according to the above embodiments of the present disclosure may further have the following additional technical features.

According to an example of the present disclosure, one of the first connection portion and the second connection portion is constructed as a protrusion extending in a radial direction, and another one of the first connection portion and the second connection portion is constructed as a groove. The protrusion is inserted and engaged into the groove. At least part of an outer surface of the protrusion abuts with at least part of an inner surface of the groove in the radial direction.

According to an example of the present disclosure, the stator tooth and the stator yoke are connected to each other by axially moving the first connection portion and/or the second connection portion towards each other.

According to an example of the present disclosure, the first connection portion is constructed as the groove. An axial cross-section of the groove has a width gradually decreasing radially towards a center of the stator yoke.

According to an example of the present disclosure, the groove is constructed as a trapezoidal groove recessed radially away from the stator tooth, and the trapezoidal groove has a maximum width greater than an opening width of the trapezoidal groove. The second connection portion is constructed as a trapezoidal protrusion having a same or similar cross-section as the trapezoidal groove.

According to an example of the present disclosure, an axial cross-section of the groove at least partially extends in a circumferential direction.

According to an example of the present disclosure, the stator tooth is constructed as a plurality of stator teeth axially stacked and arranged at intervals in a circumferential direction. A winding groove is defined between two adjacent stator teeth of the plurality of stator teeth in the circumferential direction. The stator assembly further includes a winding provided in the winding groove.

According to an example of the present disclosure, each of the plurality of stator teeth has a limit portion formed at a radial inner end of the stator tooth. The limit portion protrudes in the circumferential direction and is adapted to abut with the winding.

According to an example of the present disclosure, a transition section is formed between the second connection portion and each of the plurality of stator teeth. The transition section has a width smaller than the second connection portion and the stator tooth, respectively.

According to an example of the present disclosure, each of the plurality of stator teeth has a width gradually increasing towards the stator yoke.

According to the embodiments of the present disclosure, an electric motor includes the stator assembly according to any one of the above embodiments. Since the electric motor of the present disclosure is provided with the stator assembly according to any one of the above embodiments, the stator yoke and the stator tooth in the electric motor are respectively constructed as two separate components. The stator tooth can be manufactured by using oriented silicon steel as a raw material to reduce iron loss of the electric motor and improve the operating efficiency of the electric motor. The stator yoke and the stator tooth are respectively provided with the first connection portion and the second connection portion. In this way, the winding can be wound in the winding groove along the periphery of the stator tooth towards the center of the stator tooth, and then is axially assembled with the stator yoke together with the stator tooth. Therefore, an outer surface of the winding is protected from being scratched. As a result, operation reliability of the stator assembly can be ensured, and the operating performance and the safety of the electric motor to be improved.

According to the embodiments of the present disclosure, a power equipment includes the electric motor of the above embodiments. Since the power equipment of the present disclosure is provided with the electric motor of the above embodiments, the iron loss and copper loss of the electric motor in the power equipment are reduced through the stator assembly, and the operating efficiency of the electric motor is effectively improved. In addition, it is beneficial to reducing a temperature rise when the electric motor operates at a high speed. Therefore, the operating reliability of the electric motor can be improved, thereby optimizing the operating performance of the power equipment and improving the user experience.

Additional aspects and advantages of the present disclosure will be given at least in part in the following description, or become apparent at least in part from the following description, or can be learned from practicing of the present disclosure.

### BRIEF DESCRIPTION OF DRAWINGS

FIG. 1 is an axial cross-sectional view of a stator assembly according to an embodiment of the present disclosure.
FIG. 2 is a partial engagement of a stator yoke, a stator tooth, and a winding according to an embodiment of the present disclosure.
FIG. 3 is a partial structural view of a stator yoke, a stator tooth, and a winding according to an embodiment of the present disclosure.

### Reference numerals list:

stator assembly 1;
stator yoke 11, first connection portion 111;
stator tooth 12, second connection portion 121, transition section 122, limit portion 123;
winding 13.

### DESCRIPTION OF EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

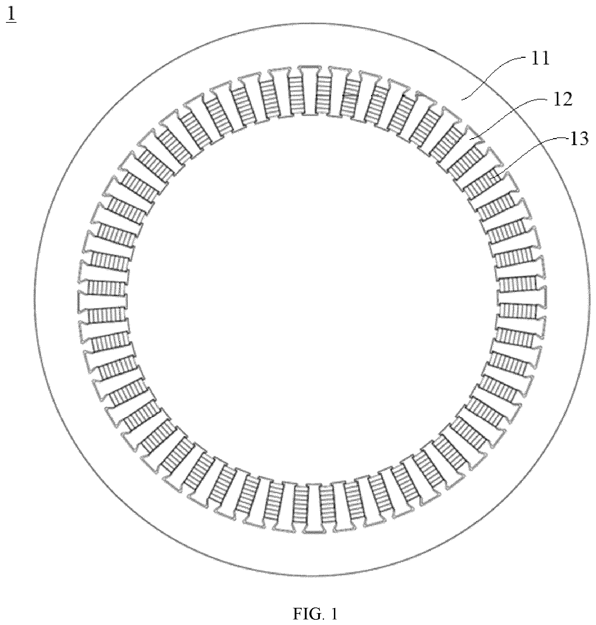

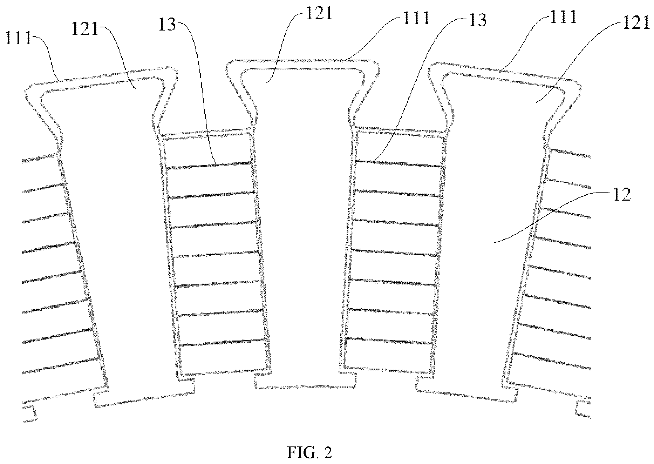

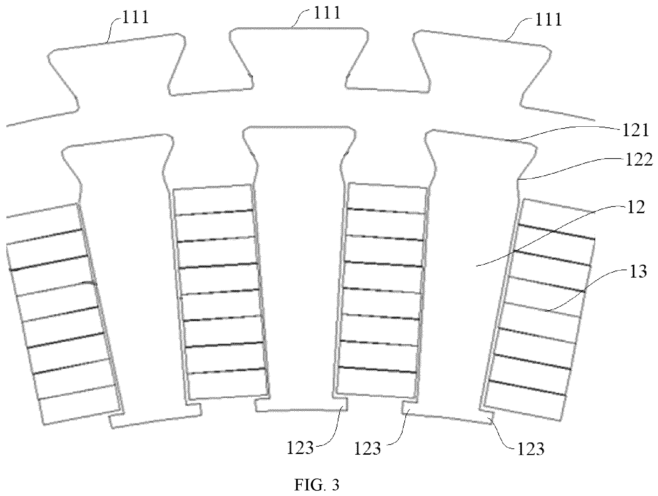

A stator assembly 1 according to the embodiments of the present disclosure is described below with reference to FIG. 1 to FIG. 3.

The stator assembly 1 for the electric motor according to the present disclosure includes a stator yoke 11 and a stator tooth 12. The stator tooth 12 and the stator yoke 11, as a part of a magnetic circuit of the electric motor, have a function of conducting magnetic flux to realize energy conversion in the electric motor. The stator yoke 11 has a receiving chamber formed in the stator yoke 11. The receiving chamber has a first connection portion 111 formed at an inner wall of the receiving chamber. The stator tooth 12 can provide mounting sites for some other components in the stator assembly 1. The stator tooth 12 has a second connection portion 121 formed at a periphery of the stator tooth 12. The second connection portion 121 is adapted to engage with the first connection portion 111 to connect the stator tooth 12 with the stator yoke 11 and to allow the stator tooth 12 to be received in the receiving chamber. Thus, the stator tooth 12 and the stator yoke 11 are integrally formed. The stator tooth 12 is made of oriented silicon steel. The oriented silicon steel has advantages of low iron loss, high magnetic induction intensity, small magnetostriction, and the like. Thus, the stator assembly 1 has good electromagnetic performance, reducing the iron loss of the electric motor, and improving performance of the electric motor.

According to the stator assembly 1 of the present disclosure, by providing the stator yoke 11 and the stator tooth 12, forming the first connection portion 111 at the inner wall of the receiving chamber of the stator yoke 11, and forming the second connection portion 121 at the periphery of the stator tooth 12, the stator tooth 12 can be connected to the stator yoke 11 by engaging the second connection portion 121 with the first connection portion 111, and the stator tooth 12 and components mounted on the stator tooth 12 can be received in the receiving chamber of the stator yoke 11, thereby realizing assembly of the stator assembly 1. The stator tooth 12 is made of the oriented silicon steel to improve magnetic permeability of the stator assembly 1, reduce iron loss of the electric motor, and reduce a temperature rise when the electric motor operates at a high speed. Therefore, operating efficiency of the electric motor is improved, a volume and cost of the electric motor is reduced, and it is beneficial to improving an endurance mileage of a whole vehicle. In the related art, the stator core is made of non-oriented silicon steel, which results in large iron loss and reduced electric motor efficiency under operation conditions of high rotation speed or high torque. However, the stator core according to the embodiments is made of the oriented silicon steel, which results in poor uniformity of various performances of the electric motor stator and cannot meet requirements of the stator yoke 11 on a magnetic circuit of a rotating motor, thereby increasing the electric motor loss and affecting the efficiency of the electric motor. The stator yoke 11 and the stator tooth 12 are respectively constructed as two separate components to allow the stator yoke 11 and the stator tooth 12 to be manufactured by using different materials and processed based on respective operating requirements. In this way, purposes of accurately using materials and optimizing the performance of the stator assembly 1 are achieved, and a material utilization rate is improved while the efficiency of the electric motor is improved, thereby saving the economic cost. In addition, since the stator yoke 11 and the stator tooth 12 are connected to each other through the engagement between the first connection portion 111 and the second connection portion 121, some components required to be mounted at the stator tooth 12 in the stator assembly 1 can be mounted and fixed at the stator tooth 12 separately before the stator tooth 12 and the stator yoke 11 are assembled, thereby avoiding a limitation of the stator yoke 11 on a mounting direction and a mounting space of the components on the stator tooth 12. Therefore, the mounting direction and the mounting space of the components on the stator tooth 12 can be increased, thereby effectively improving mounting convenience of the components on the stator tooth 12. Therefore, it is beneficial to protecting an upper part of the stator tooth from scratch, thereby contributing to improve the safety of the stator assembly 1 and prolonging a service life of the stator assembly 1.

Further, in a specific embodiment of the present disclosure, the stator yoke 11 is made of non-oriented silicon steel. Since the magnetic permeability of the non-oriented silicon steel is basically consistent in all directions and has the effect of reducing coercive force, core loss, and magnetic aging, by making the stator yoke 11 of the non-oriented silicon steel, the magnetic density of the stator yoke 11 can be balanced, and thus the stator yoke 11 has good operating performance.

In another specific embodiment of the present disclosure, the stator yoke 11 is formed by winding. In this way, waste materials are reduced while improving manufacturing convenience of the stator yoke 11, thereby further reducing material consumption of the electric motor, improving the material utilization rate, and saving economic costs.

According to an embodiment of the present disclosure, an engagement manner of the first connection portion 111 and the second connection portion 121 is an insertion engagement between a protrusion and a groove. In the stator assembly 1 of this embodiment, the first connection portion 111 may be constructed as a protrusion extending in a radial direction, and the second connection portion 121 may be constructed as a groove inserted and engaged into the protrusion. In the stator assembly 1 of this embodiment, the second connection portion 121 may also be constructed as a protrusion extending in the radial direction, and the first connection portion 111 may be constructed as a groove inserted and engaged into the protrusion. At least part of an outer surface of the protrusion abuts with at least part of an inner surface of the groove in the radial direction. By constructing one of the first connection portion 111 and the second connection portion 121 as the protrusion extending in the radial direction and the other one as the groove inserted and engaged into the protrusion, the stator yoke 11 and the stator tooth 12 can be quickly and easily assembled through insertion engagement, thereby improving the assembly efficiency of the stator assembly 1. After the protrusion is inserted and engaged into the corresponding groove, the stator tooth 12 is received in the receiving chamber of the stator yoke 11. In this case, at least part of the outer surface of the protrusion abuts with at least part of the inner surface of the groove in the radial direction. Therefore, the protrusion and the groove can restrict a radial movement between the stator yoke 11 and the stator tooth 12, thereby improving the accuracy of a position of the stator tooth 12 in the receiving chamber. As a result, the accuracy of the stator assembly 1 in controlling the assembly position of the stator tooth 12 and the stator yoke 11 is improved.

According to an embodiment of the present disclosure, the stator tooth 12 and the stator yoke 11 are connected to each other by axially moving the first connection portion 111 and/or the second connection portion 121 towards each other. It can be understood that a movement direction of the first connection portion 111 and/or the second connection portion 121 is an assembling direction of the stator tooth 12 and the stator yoke 11. Therefore, by axially moving the first connection portion 111 and/or the second connection portion 121 towards each other, the stator tooth 12 and the stator yoke 11 can be connected to each other only through the relatively axial movement. Therefore, a simple and convenient assembly between the stator tooth 12 and the stator yoke 11 is realized, and assembly efficiency and maintenance convenience of the stator assembly 1 are further improved.

In addition, in a specific embodiment of the present disclosure, a connection process between the stator yoke 11 and the stator tooth 12 may be as follows. Firstly, the stator tooth 12 is fixed by an assembly tooling, and accordingly the second connection portion 121 on the stator tooth 12 is fixed. Then, the stator yoke 11 is axially moved towards the stator tooth 12 to axially move the first connection portion 111 on the stator yoke 11 towards the second connection portion 121 accordingly. In this process, the stator tooth 12 gradually enters the receiving chamber until the first connection portion 111 is inserted and engaged into the second connection portion 121, and accordingly an assembly of the stator yoke 11 and the stator tooth 12 is completed. In this embodiment, the connection process between the stator yoke 11 and the stator tooth 12 may also be as follows. Firstly, the stator yoke 11 is fixed by an assembly tooling, and accordingly the first connection portion 111 on the stator yoke 11 is fixed. Then, the stator tooth 12 is axially moved towards the stator yoke 11 to axially move the second connection portion 121 on the stator tooth 12 towards the first connection portion 111 axially. Similarly, in this process, the stator tooth 12 gradually enters the receiving chamber until the first connection portion 111 is inserted and engaged into the second connection portion 121, and accordingly the assembly of the stator yoke 11 and the stator tooth 12 is completed. In this embodiment, the connection process between the stator yoke 11 and the stator tooth 12 may also be that the stator yoke 11 and the stator tooth 12 axially move towards each other until the first connection portion 111 and the second connection portion 121 are inserted and engaged into each other, and accordingly the assembly of the stator yoke 11 and the stator tooth 12 is completed.

According to an embodiment of the present disclosure, the first connection portion 111 is constructed as a groove, and an axial cross-section of the groove has a width gradually decreasing radially towards a center of the stator yoke 11. Correspondingly, the second connection portion 121 is constructed as a protrusion, and an axial cross-section of the protrusion has a width gradually decreasing radially towards a center of the stator tooth 12. Since the first connection portion 111 is constructed as the groove and the axial cross-section of the groove has a width gradually decreasing radially towards the center of the stator yoke 11, the protrusion is received in the corresponding groove after the first connection portion 111 is inserted and engaged into the second connection portion 121. In this case, the groove can restrict the protrusion to prevent the protrusion from radially being separated from the groove. As a result, the connection strength and stability of the protrusion and the groove is increased. The connection stability between the stator tooth 12 and the stator yoke 11 is improved, thereby ensuring the operating reliability and safety of the stator assembly 1.

According to an embodiment of the present disclosure, the groove is constructed as a trapezoidal groove recessed radially away from the stator tooth 12, and the trapezoidal groove has a maximum width greater than an opening width of the trapezoidal groove. An opening of the trapezoidal groove opens radially towards the stator tooth 12. The second connection portion 121 is constructed as a trapezoidal protrusion having a same or similar cross-section as the trapezoidal groove. The trapezoidal protrusion has a maximum width greater than an opening width of the trapezoidal protrusion. By constructing the first connection portion 111 and the second connection portion 121 as the trapezoidal groove and the trapezoidal protrusion respectively, a sidewall of the trapezoidal groove can guide and position the trapezoidal protrusion. Therefore, when the trapezoidal protrusion is axially engaged with the trapezoidal groove, the stator tooth 12 can easily and accurately enter into the receiving chamber and be connected to the stator yoke 11, thereby further improving the assembly convenience of the stator assembly 1. In addition, by constructing the first connection portion 111 and the second connection portion 121 as the trapezoidal groove and the trapezoidal protrusion, respectively, and setting the maximum width of the trapezoidal groove to be greater than the opening width of the trapezoidal groove, after the trapezoidal protrusion axially enters the trapezoidal groove, the opening width of the trapezoidal groove is smaller than the maximum width of the trapezoidal protrusion in the groove. Therefore, the trapezoidal protrusion in the groove cannot be separated from the opening in the radial direction, thereby further ensuring the connection reliability between stator tooth 12 and stator yoke 11. In addition, since the sidewall of the trapezoidal groove obliquely extends, the sidewall of the trapezoidal groove can further support the trapezoidal protrusion, thereby further improving the connection stability between the stator tooth 12 and the stator yoke 11.

According to an embodiment of the present disclosure, an axial cross-section of the groove at least partially extends in a circumferential direction. Specifically, the groove includes a first segment and a second segment. The axial cross-section of the groove at least partially extends in the circumferential direction and is formed as the first segment. The second segment is connected to the first segment and extends towards the stator tooth 12. The first segment is formed at two ends or any one end of the second segment in the circumferential direction. When the protrusion axially moves to be received in the groove, the first section extending in the circumferential direction can restrict the protrusion radially and circumferentially, thereby effectively ensuring the connection stability between the protrusion and the groove, which further ensures a normal operation of the stator tooth 12 and the stator yoke 11.

According to an embodiment of the present disclosure, the stator tooth 12 is constructed as a plurality of stator teeth 12 axially stacked and arranged at intervals in a circumferential direction. A winding groove is defined between two stator teeth 12 adjacent to each other in the circumferential direction. The stator assembly 1 further includes a winding 13 provided in the winding groove, and the winding 13 can generate a magnetic field after a current is switched on. As a result, the normal operation of the stator assembly 1 is realized. By forming the winding groove to allow the winding 13 to be arranged in the winding groove, since the stator teeth 12 are arranged at intervals in the circumferential direction, the winding groove defined between two adjacent stator teeth 12 has a first opening and a second opening. The first opening directly faces towards the second opening from inside to outside in the radial direction. Therefore, in a mounting process of the winding 13, the winding 13 can enter into the winding groove from the first opening or the second opening in the radial direction, and the winding 13 can further enter the winding groove in an axial direction of the stator tooth 12, thereby increasing the mounting direction and the mounting space of the winding 13 in the winding groove, which can improve the mounting convenience of the winding 13 on the stator tooth 12. In addition, it is beneficial to protecting an outer surface of the winding 13 from being scratched, thereby improving operating safety and prolonging a service life of the winding 13.

According to an embodiment of the present disclosure, a limit portion 123 is formed at a radial inner end of the stator tooth 12. The limit portion 123 protrudes in the circumferential direction and is adapted to abut with the winding 13. The limit portions 123 of two adjacent stator teeth 12 protrude towards each other in the circumferential direction to define the first opening of one winding groove. By forming the limit portion 123 protruding in the circumferential direction at the radial inner end of the stator tooth 12, the limit portion 123 can abut with the winding 13 to position the mounting of the winding 13 on the stator tooth 12, and the winding groove can have the first opening. Therefore, when the electric motor is in an operating state, the first opening can increase a magnetic resistance of a magnetic leakage flux in the electric motor, thereby reducing the magnetic leakage, which can further improve the power density and operating efficiency of the electric motor. In addition, the first opening can further improve the assembly convenience between the winding 13 and the winding groove.

In addition, in a specific embodiment of the present disclosure, the winding 13 is wound along the outer periphery of the stator tooth 12 towards the center of the stator tooth 12 in the winding groove, to realize a fixed connection between the winding 13 and the stator tooth 12. In a conventional assembling method of the flat-wire winding in the related art, the wire is axially inserted from top to bottom, and a flat enamel-coated wire is scratched in the enamel or cracked in an insulating paper due to factors such as a size design of the stator opening and a thickness of the insulating paper in the assembling process, resulting in insulation failure. In the present disclosure, when the winding 13 is mounted at the stator tooth 12, the winding 13 can be assembled radially from the second opening with a diameter greater than a diameter of the first opening. In addition, an assembly stroke is shortened from an axial length distance of the stator core to a deep length distance of the winding groove, thereby reducing the damage possibility of the assembly stroke in the axial length distance when the winding 13 enters the groove, which ensures the safety of the winding 13. In addition, in conventional technologies in which an assembly direction of a round wire winding and a wave-wound flat wire winding is from inside to outside, by entering the groove from the opening of the stator groove, the winding is assembled from inside towards an outer circle of the stator, and due to the small size of the opening of the stator groove, the enamel-coated wire and the opening are easy to interfere and generates scratch in the assembling process, resulting in damage to the enamel of the enamel-coated wire or the insulating paper. The winding 13 in the present disclosure can be assembled along the outer periphery of the stator tooth 12 towards the center of the stator tooth 12. As a result, a damage risk of the enamel-coated wire and the insulating paper can be reduced. In addition, an electromagnetic scheme can be designed without being limited by the opening size, which is beneficial to optimizing the performance of the electric motor.

In another specific embodiment of the present disclosure, after the winding 13, the stator tooth 12, and the stator yoke 11 are assembled into the stator assembly 1, the stator assembly 1 is insulated and cured by immersing the stator assembly 1 in insulating paint, to further increase the connection strength among the winding 13, the stator tooth 12, and the stator yoke 11 and improve a natural mode of the stator assembly 1. Therefore, optimizing Noise, Vibration, Harshness (NVH) performance of the electric motor under various operating conditions is facilitated.

According to an embodiment of the present disclosure, a transition section 122 is formed between the second connection portion 121 and the stator tooth 12. The transition section 122 has a width smaller than the second connection portion 121 and the stator tooth 12, respectively. By providing the transition section 122, a transition may be formed between the stator tooth 12 and the second connection portion 121 on the outer periphery of the stator tooth 12. Therefore, the width of the second connection portion 121 is not limited by the width of the stator tooth 12, which is more beneficial to optimizing a design of the stator assembly 1. In addition, the transition section 122 further improves the manufacturing convenience of the second connection portion 121 and the stator tooth 12, and prevents burrs from being generated between the second connection portion 121 and the stator tooth 12. Therefore, it is beneficial to improving the manufacturing quality of the second connection portion 121 and the stator tooth 12, thereby prolonging the service life of the stator assembly 1 and saving the maintenance cost.

According to an embodiment of the present disclosure, each stator tooth 12 has a width gradually increasing towards the stator yoke 11. As the plurality of stator teeth 12 is annular, the width of each stator tooth 12 is set to gradually increase towards the stator yoke 11, allowing the winding groove between the adjacent stator teeth 12 in the circumferential direction to be constructed as a parallel groove. The parallel groove has a large groove surface area and a high groove filling rate, which is beneficial to improving utilization rate of the iron core and the uniformity of the magnetic field of the winding 13. Therefore, it is beneficial to reducing the iron loss and the copper loss in an operating process of the electric motor, thereby increasing the operating efficiency and the performance of the electric motor.

An electric motor according to the present disclosure will be briefly described below.

The electric motor of the present disclosure includes the stator assembly 1 according to any one of the above embodiments. Since the electric motor of the present disclosure is provided with the stator assembly 1 according to any one of the above embodiments, the stator yoke 11 and the stator tooth 12 in the electric motor are respectively constructed as two separate components. The stator tooth 12 can be manufactured by using oriented silicon steel as a raw material to reduce iron loss of the electric motor and improve the operating efficiency of the electric motor. The stator yoke 11 and the stator tooth 12 are respectively provided with the first connection portion 111 and the second connection portion 121. In this way, the winding 13 can be wound along the periphery of the stator tooth 12 towards the center of the stator tooth 12 in the winding groove, and then is axially assembled with the stator yoke 11 together with the stator tooth 12. Therefore, the outer surface of the winding 13 is protected from being scratched. Therefore, operation reliability of the stator assembly 1 can be ensured, and the operating performance and the safety of the electric motor can be improved.

A power equipment according to the present disclosure will be briefly described below.

The power equipment of the present disclosure includes the electric motor of the above embodiments. Since the power equipment of the present disclosure is provided with the electric motor of the above embodiments, the iron loss and copper loss of the electric motor in the power equipment are reduced through the stator assembly 1, and the operating efficiency of the electric motor is effectively improved. In addition, it is beneficial to reducing a temperature rise when the electric motor operates at a high speed. Therefore, the operating reliability of the electric motor is improved, thereby optimizing the operating performance of the power equipment and improving the user experience.

In the description of the present disclosure, it should be understood that the orientation or position relationship indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc., is based on the orientation or position relationship shown in the drawings, and is only for the convenience of describing the present disclosure and simplifying the description, rather than indicating or implying that the pointed apparatus or element must have a specific orientation, or be constructed and operated in a specific orientation, and therefore cannot be understood as a limitation to the present disclosure.

In addition, terms "first" and "second" are only used for descriptive purposes, and cannot be understood as indicating or implying relative importance or implicitly indicating the number of the indicated technical features. Therefore, the features associated with "first" and "second" may explicitly or implicitly include at least one of the features. In the description of the present disclosure, "plurality" means at least two, unless otherwise specifically defined.

In the present disclosure, unless otherwise clearly specified and limited, terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those of ordinary skill in the art, the specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

In the description of this specification, description with reference to the terms "an embodiment", "some embodiments", "exemplary embodiments", "examples" "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner. Further, different embodiments or examples and features of different embodiments or examples described in this specification may be combined and combined by one skilled in the art without contradiction.

Although embodiments of the present disclosure have been shown and described above, it should be understood that the above embodiments are merely exemplary, and cannot be construed as limitations of the present disclosure. For those of ordinary skill in the art, changes, alternatives, and modifications may be made to the above embodiments without departing from the scope of the present disclosure.

## Claims

1. A stator assembly for an electric motor, the stator assembly comprising:
a stator yoke having a receiving chamber formed in the stator yoke, the receiving chamber having a first connection portion formed at an inner wall of the receiving chamber; and
a stator tooth having a second connection portion formed at a periphery of the stator tooth, the second connection portion being adapted to engage with the first connection portion to connect the stator tooth with the stator yoke and to allow the stator tooth to be received in the receiving chamber,
wherein the stator tooth is made of oriented silicon steel.

2. The stator assembly according to claim 1, wherein one of the first connection portion and the second connection portion is constructed as a protrusion extending in a radial direction, and another one of the first connection portion and the second connection portion is constructed as a groove, wherein:
the protrusion is inserted and engaged into the groove; and
at least part of an outer surface of the protrusion abuts with at least part of an inner surface of the groove in the radial direction.

3. The stator assembly according to claim 2, wherein the stator tooth and the stator yoke are connected to each other by axially moving the first connection portion and/or the second connection portion towards each other.

4. The stator assembly according to claim 3, wherein the first connection portion is constructed as the groove, wherein an axial cross-section of the groove has a width gradually decreasing radially towards a center of the stator yoke.

5. The stator assembly according to claim 4, wherein:
the groove is constructed as a trapezoidal groove recessed radially away from the stator tooth, the trapezoidal groove having a maximum width greater than an opening width of the trapezoidal groove; and
the second connection portion is constructed as a trapezoidal protrusion having a same or similar cross-section as the trapezoidal groove.

6. The stator assembly according to any one of claims 3 to 5, wherein an axial cross-section of the groove at least partially extends in a circumferential direction.

7. The stator assembly according to any one of claims 1 to 6, wherein:
the stator tooth is constructed as a plurality of stator teeth axially stacked and arranged at intervals in a circumferential direction, a winding groove being defined between two adjacent stator teeth of the plurality of stator teeth in the circumferential direction; and
the stator assembly further comprises a winding provided in the winding groove.

8. The stator assembly according to claim 7, wherein each of the plurality of stator teeth has a limit portion formed at a radial inner end of the stator tooth, the limit portion protruding in the circumferential direction and being adapted to abut with the winding.

9. The stator assembly according to claim 7 or 8, wherein a transition section is formed between the second connection portion and each of the plurality of stator teeth, the transition section having a width smaller than the second connection portion and the stator tooth, respectively.

10. The stator assembly according to any one of claims 7 to 9, wherein each of the plurality of stator teeth has a width gradually increasing towards the stator yoke.

11. An electric motor, comprising the stator assembly according to any one of claims 1 to 9.

12. A power equipment, comprising the electric motor according to claim 11.
